Europäisches Patentamt

European Patent Office

Office européen des brevets

(11) Publication number: 0 269 091
A2

## (12) EUROPEAN PATENT APPLICATION

(21) Application number: 87117409.0

(22) Date of filing: 25.11.87

(51) Int. Cl.⁴: F15B 21/04 , B29C 45/23

(30) Priority: 28.11.86 JP 182965/86 U

(43) Date of publication of application:
01.06.88 Bulletin 88/22

(84) Designated Contracting States:
AT BE CH DE ES FR GB GR IT LI LU NL SE

(71) Applicant: Mold-Masters Kabushiki Kaisha
Yurigaoka Sudosan Building 3F 1-1-5,
Takaishi Asao-ku
Kawasaki Kanagawa 215(JP)

(72) Inventor: Okamura,Isao
1-6-10,Seishin, Segamihara
Kanagawa 215(JP)

(74) Representative: Patentanwälte Grünecker,
Kinkeldey, Stockmair & Partner
Maximilianstrasse 58
D-8000 München 22(DE)

(54) Hydraulic cylinder actuator.

(57) This invention relates to an improved hydraulic actuator such as those used to reciprocate the valve pin in an injection molding system. A small diameter hole is provided through the piston. This allows a limited flow of hydraulic fluid from one side of the cylinder to the other, but yet enables the piston to the valve pin or other mechanism in the manner necessary. This small flow of hydraulic fluid provides for the escape of trapped air, relieves stagnation and excessive temperature build up in the fluid, and avoids the accumulation of sediment and corrosion.

FIG.1.

# HYDRAULIC CYLINDER ACTUATOR

This invention relates to hydraulic actuators, for example those used to drive a valve pinto open and close a gate in injection molding for forming plastics, and more particularly to an improvement providing for the discharge of air and/or foreign matter contained in the hydraulic fluid in the actuators.

In the past, hydraulic actuators are well known in the injection molding field to drive the valve pinto open and close the gate leading to the cavity. Also known are systems wherein a continuous flow of hydraulic fluid is provided through the hydraulic cylinder for additional cooling. Examples are shown in the applicant's Canadian patent application serial number 520,804 entitled "Fluid Cooled Hydraulic Actuating Mechanism for Injection Molding" filed October 17, 1986 and 521,950 entitled "Fluid Cooled Hydraulic Actuating Mechanism for Single Cavity Injection Molding" filed October 31, 1986.

In hydraulic cylinder actuators of this nature, since the displacement of the valve pin is extremely slight, the piston movement is also slight. In a hydraulic cylinder actuator, air remains within its interior at the time of piping connecting work, and it is difficult to extract this air in many cases. It is well known that such residual air is undesirable. Furthermore, if the movement of the piston is slight, the movement of the hydraulic fluid accompanying the piston movement is also slight, and the hydraulic fluid merely undergoes reciprocating flow within a narrow scope between the piping and the cylinder, whereby during operation over a long time period, the undesirable results are a rise in the fluid temperature, deterioration of the fluid due to a long period of stagnation, and/or the generation of sediments and corrosion occur.

While various measures for solving these problems have been proposed before, none of them have been entirely satisfactory because of their complicated construction and high cost.

## SUMMARY OF THE INVENTION

Accordingly, it is an object of the present invention to at least partially overcome the problems of the prior art by providing a hydraulic actuator having a piston with a small diameter hole extending axially therethrough to provide for a small flow of hydraulic fluid therethrough.

To this end, in one of its aspects, the invention provides a hydraulic actuator comprising a piston seated in a cylinder for reciprocal movement in the cylinder, and a piping system for supplying hydraulic fluid to the cylinder on one side of the piston and discharging hydraulic fluid from the cylinder on the opposite side of the piston, the improvement wherein a hole is provided extending axially through the piston, the hole having a cross sectional area that is considerably less than the working area of the piston.

Further objects and advantages of the invention will appear from the following description, taken together with the accompanying drawings.

## BRIEF DESCRIPTION OF THE DRAWINGS

Figure 1 is a piping drawing showing a hydraulic actuator according to a preferred embodiment of the invention;

Figure 2 is a sectional view showing only the hydraulic cylinder and piston of Figure 1;

Figure 3 is a sectional view of a prior art injection molding system to which the present invention be applied;

Figure 4 is a plan view of the system shown in Figure 3; and

Figure 5 is a piping drawing showing a prior art hydraulic actuator.

## DETAILED DESCRIPTION OF THE DRAWINGS

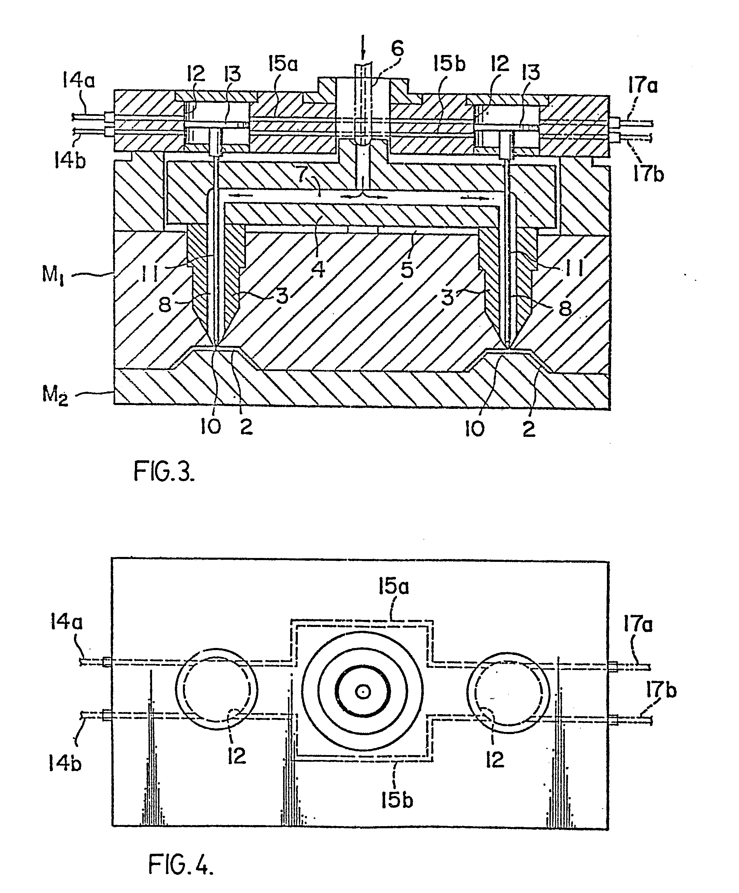

Figs. 3 and 4 show an injection molding system for forming or casting plastics to which the principle of this inventive concept can be applied. In these figures, $M_1$ designates a fixed or stationary mold, and $M_2$ designates a mobile or movable mold. With the mold in its closed state as shown, the movable mold $M_2$ forms molded article cavities 2 between it and the fixed mold $M_1$. The fixed mold $M_1$ is provided therewithin with known heated nozzles 3, and in close proximity thereto a hot manifold 4 is provided. Between the hot manifold 4 and the fixed mold $M_1$, an air thermal insulation space 5 is formed. Molten plastic melt injected from a molding machine nozzle 6 flows in the known manner through a resin flow passage 7 within the hot manifold 4 and resin passages 8 within the heater nozzles 3 and is received in the molded article cavity 2 to be molded. Upon completion of molding, the movable mold M₂ is shifted downward in Fig. 3 to open the mold.

In order to open and close gates 10 between the resin passages 8 of the heater nozzles 3 and the molded article cavities 2, known valve pins 11 are provided. The driven end of each valve pin 11 is fixed to a respective piston 13 to reciprocate within a respective hydraulic cylinder 12, and, when hydraulic fluid is fed through hydraulic fluid line 14a to the back side (upper side in Fig. 3) of the piston 13 of the hydraulic cylinder 12, the valve pin 11 advances, and its extreme end closes the gate 10. Then, when hydraulic fluid is supplied through hydraulic fluid line 14b to the front part of piston 13 of the hydraulic cylinder 12, the valve pin 11 retracts, and the gate 10 is opened.

The two cylinders 12 are communicatively connected by hydraulic pressure passages 15a and 15b so as to synchronize the movements of the valve pins 11.

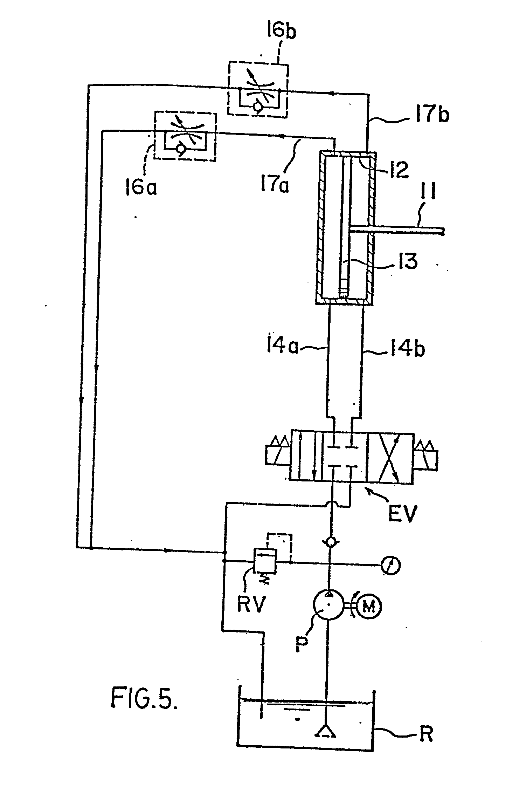

As shown in Fig. 5, in order to supply hydraulic fluid to either of the front and back side of the piston 13 of each hydraulic cylinder 12, a fluid reservoir R, a pump P, a selector valve EV of electromagnetic type for selectively changing over pipeline paths, a relief valve RV, and other parts are provided. The cylinder spaces on opposite sides of the piston 13 are essentially separated or isolated. Furthermore, the volume of the fluid which flows through the fluid lines 14a or 14b for each stroke of the piston 13 is approximately equal to the volume of the space on one side of the cylinder.

The above described organization of parts is known. The stroke of the piston 13 sliding within the hydraulic cylinder 12 is very short, being less than 10mm. The reason for this is that only a small movement of the valve pin 11 is sufficient to open and close the gate, and, moreover, each cylinder within the mold must be compact. On the other hand, the hydraulic fluid lines are generally of small diameter. A hydraulic cylinder actuator in which the piston stroke is short relative to the volume of the piping system, as in this example, has been accompanied by the following problems.

First, during the work of connecting the piping of a hydraulic cylinder actuator, air remains in the interior thereof and cannot be easily extracted in many cases, and this residual air has a detrimental effect on the operation of the actuator. However, because the stroke of the piston is small in comparison with the volume of the piping system, there is not a large flow of hydraulic fluid, and the residual air merely reciprocates within a narrow range and is not removed. Furthermore, because the flow of hydraulic fluid is small, the hydraulic fluid is confined within a narrow range between the piping and the cylinder and never returns to the source of hydraulic pressure. As a result, the temperature of the fluid around the hot valve pin 11 rises after a long period of operation. Furthermore, after a long period of stagnation the fluid deteriorates and gives rise to the formation of sediment and corrosion, which remain permanently and impair the operation of the actuator.

In one method which has previously been proposed for avoiding this difficulty, the two chambers on opposite sides of each hydraulic cylinder 12 are connected to the fluid reservoir R respectively via fluid piping 17a and 17b respectively having fluid flow regulating valves 16a and 16b as shown in Figs. 3, 4 and 5. By this method, since the hydraulic fluid is supplied from the hydraulic pressure source and circulated, there is no stagnation thereof in the cylinder 12 or the piping and thus it is possible to prevent the aforedescribed trouble. Furthermore, by adjusting the fluid flow regulating valves 16a and 16b, the forces applied to the piston 13 can be regulated. In the practice of this method, however, additional equipment such as branch pipes, regulating valves, and return path hose become necessary as well as the expense for the installation thereof, all of which increase the cost.

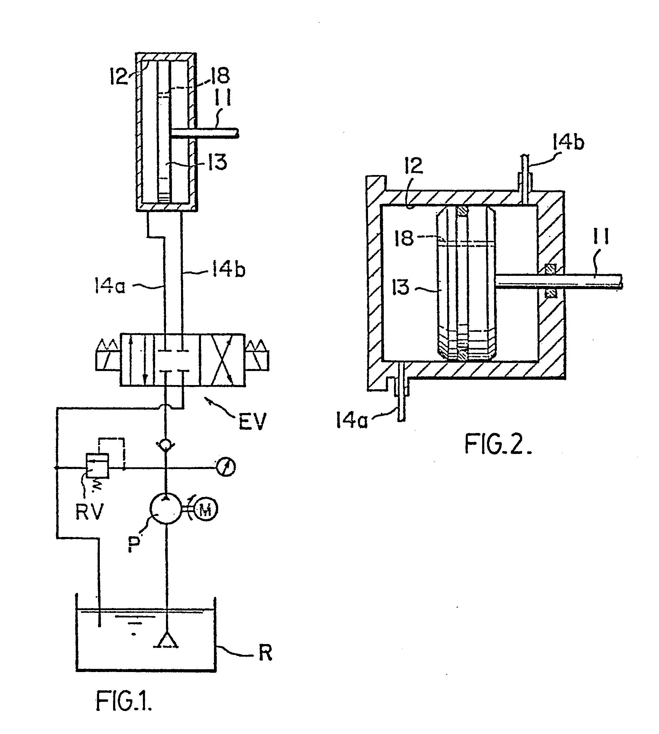

The present invention prevents the occurrence of fluid stagnation without entailing the above described problem by forming through the piston 13 of the hydraulic cylinder 12 a small hole 18, as shown in Figs. 1 and 2, of a cross-sectional area which is considerably smaller than the working surface area of the piston 13. The small hole 18 can be formed with a cross section of circular shape or any other shape, and the cross-section of circular shape or any other shape, and the cross-section dimension corresponding to the diameter is preferably between approximately 0.8mm and 2mm, for example.

By forming this narrow hole 18 through the piston 13 in this manner, when hydraulic fluid is supplied to one of the cylinder spaces or chambers, the fluid within this chamber flows, together with air hole 18 and into the cylinder chamber on the low pressure side and returns toward the fluid reservoir R. Since the fluid flows through the hole 18 during the period of application of pressure in the chamber of the piston, even if its stroke is small, it is possible to design the system so as to obtain a return flow quantity, even if the hole is of a small dimension.

Generally, a dimension of the narrow hole less than 0.8mm is not desirable since it would cause the flow rate to be excessively small or it would tend to cause clogging by solid foreign matter. On the other hand, an excessively large dimension of the narrow hole is not desirable because it would result in considerable delay and reduction in the driving force of the piston. Practically, a dimension corresponding to a diameter of the narrow hole of 2mm or less, and a flow rate of 0.02 to 1 litre/min through the hole in the case of a fluid pressure difference of 10 to 140 kg/cm² are suitable.

In the design of these quantities, the appropriate diameter of the narrow hole is determined in accordance with the delivery capacity of the hydraulic fluid pressure source, the cylinder piston displacement, the volume of the piping up to the fluid tank, and other factors.

In order to cause the fluid to be returned to the fluid reservoir by the stroke of the pistons, it is desirable that the following relationship be sustained.

$$\left[\begin{array}{c}\text{Pressure}\\\text{application}\\\text{time (min)}\end{array}\right] \times \left[\begin{array}{c}\text{Leakage per}\\\text{unit time}\\\text{(l/min)}\end{array}\right] > \left[\begin{array}{c}\text{Volume of}\\\text{cylinder and}\\\text{piping (}\ell\text{)}\end{array}\right]$$

It will be apparent that the above described principle of this invention is equally applicable to cylinder piston actuators in which various kinds of respective hydraulic fluids are used.

As described above, in this invention, by providing the piston of a hydraulic cylinder actuator with a small hole which is much smaller in comparison with the working area of the piston, a circuit for circulating the actuating oil a small amount at a time can be created without greatly reducing the actuating force of the piston. Thus, extracting or venting of air is made possible with a simple construction: excessive increases in fluid temperature and/or stagnation of the fluid is prevented and accumulation of sediments and/or deterioration of the fluid can be prevented.

## Claims

1. In a hydraulic actuator comprising a piston seated in a cylinder for reciprocal movement in the cylinder, and a piping system for supplying hydraulic fluid to the cylinder on one side of the piston and discharging hydraulic fluid from the cylinder on the opposite side of the piston, the improvement wherein a hole is provided extending axially through the piston, the hole having a cross sectional area that is considerably less than the working area of the piston.

2. An actuator as claimed in claim 1 wherein the diameter of the hole through the piston is between approximately 0.8mm and 2mm.

FIG.1.

FIG.2.

FIG.3.

FIG.4.

FIG.5.